# EUROPÄISCHE PATENTSCHRIFT

(11) **EP 1 404 008 B1**
(45) Veröffentlichungstag und Bekanntmachung des Hinweises auf die Patenterteilung: **23.11.2005**
(21) Anmeldenummer: 03018446.9
(22) Anmeldetag: 14.08.2003
(51) Int. Cl.: H02K 5/24, F04D 29/66, H02K 11/04, H02K 5/173

(54) **Elektromotor mit schraubenloser Steckmontage**
Electric motor with screwless plug-in mounting
Moteur électrique à montage enfichable sans vis

(30) Priorität: 30.09.2002 DE 10245971
(43) Veröffentlichungstag der Anmeldung: 31.03.2004
(73) Patentinhaber: ebm-papst Mulfingen GmbH & Co.KG, 74673 Mulfingen (DE)
(72) Erfinder: Streng, Gunter, Dipl.-Ing.(FH), 74575 Schrozberg (DE); Müller, Rainer, Dipl.-Ing.(FH), 74639 Zweiflingen-Pfahlbach (DE); Gelbing, Markus, Dipl.-Ing.(FH), 74599 Wallhausen (DE); Freudenberg, Jürgen, Dipl.-Ing.(FH), 22049 Hamburg (DE); Häfner, Jochen, Dipl.-Ing., 74572 Blaufelden (DE)
(74) Vertreter: Patentanwälte Dr. Solf & Zapf

(56) Entgegenhaltungen:
- EP-A- 0 848 477
- WO-A-00/57541
- GB-A- 2 169 754
- US-A- 5 126 607
- US-A- 6 098 948
- US-B1- 6 262 504

## Beschreibung

Die vorliegende Erfindung betrifft einen Elektromotor, insbesondere Außenläufermotor, mit einem Stator, der an einem Motorträger über einen axialen Steckfügevorgang schraubenlos mittels Verrastungselementen befestigt ist, nach dem Oberbegriff des Patentanspruchs 1.

Das nächstkommende Dokument US-A-6 098 948 beschreibt eine Vorrichtung zur elastischen Befestigung eines Elektromotors in einem Gehäuse. Der Motor bzw. dessen Stator weist vier radiale Haltearme auf, die mit ihren äußeren Enden in elastischen Dämpfungselementen sitzen, die ihrerseits in Hohlräumen des topfartigen Gehäuses angeordnet sind. Die Haltearme können mit den auf den Enden sitzenden Dämpfungselementen in axialer Richtung in das Gehäuse und die zugehörigen Hohlräume eingeführt werden. Zur Sicherung ist ein ringförmiges Halteelement vorgesehen, welches ebenfalls axial aufgesetzt wird und dann mit einem radialen Stegabschnitt an den Dämpfungselementen anliegt und diese dadurch in den Hohlräumen hält. Das Halteelement wird dabei mit dem Gehäuse verrastet, indem es mit radialen Rastnasen in Gehäuseöffnungen eingreift.

Ein weiterer Motor ist in der WO 00157541 beschrieben. Zur schraubenlosen Montage weist der Stator axiale Rastarme auf, die mit endseitigen Rastnasen direkt in den Motorträger bzw. in korrespondierende Öffnungen eines topfförmigen Gehäuseteils eingreifen. Vor allem dann, wenn der Motor - wie ebenfalls beschrieben ist - zum Antrieb eines Lüfterrades dient, treten im Betrieb zum Teil recht starke Vibrationen bzw. Schwingungen auf, die zu störenden Geräuschen führen.

Es sind im Stand der Technik auch Maßnahmen zur Schwingungsisolation bekannt (vergleiche beispielsweise EP 0 240 644 B1), wobei aber Schraubverbindungen erforderlich sind.

Der vorliegenden Erfindung liegt die Aufgabe zugrunde, bei einem Elektromotor der beschriebenen Art mit einfachen und kostengünstigen Mitteln eine Reduzierung der Betriebsgeräusch-Emission unter Gewährleistung einer besonders einfachen und schnellen, schraubenlosen Steckmontage insbesondere zwischen dem Stator und einem Motorträger zu erreichen.

Erfindungsgemäß wird dies durch die Merkmale des Anspruchs 1 erreicht. Vorteilhafte Ausgestaltungsmerkmale sind in den abhängigen Ansprüchen enthalten.

Demnach sind im Verbindungsbereich zwischen dem Stator und dem Motorträger Elastikelemente zur Schwingungsentkopplung derart integriert angeordnet, dass der Stator nur mittelbar über die Elastikelemente mit dem Motorträger in Verbindung steht. Dies bedeutet, dass die zur Halteverbindung vorgesehenen Verrastungselemente keine direkte, schwingungsübertragende Verbindung herstellen. Vielmehr ist vorgesehen, dass die Elastikelemente jeweils derart an einem Verbindungsabschnitt des Stators fixiert sind, dass der Motorträger mit einem korrespondierenden Verbindungsabschnitt axial aufsteckbar ist. Die Verrastungselemente dienen dann nur zu einer Fixierung der Elastikelemente relativ zu dem Motorträger in axialer Richtung. Dazu sind die Verrastungselemente als separate Federklammem ausgebildet, die von außen derart auf den Verbindungsabschnitt des Motorträgers aufrastbar sind, dass sie die Elastikelemente jeweils zwischen einer inneren Anlagestufe und einem endseitigen, in den Bereich des Elastikelementes eingreifenden Federklammer-Stützabschnitt halten.

Anhand von bevorzugten, in der Zeichnung veranschaulichten Ausführungsformen soll die Erfindung beispielhaft genauer erläutert werden. Dabei zeigen:
- Fig. 1: eine Perspektivansicht eines erfindungsgemäßen Elektromotors mit einer ersten Ausführungsform eines Motorträgers,
- Fig. 2: einen Axialschnitt durch den Motor nach Fig. 1 in einer ersten diametralen Schnittebene (Ebene II-II gemäß Fig. 3 und 4 bzw. entsprechend der in Fig. 1 eingezeichneten Diagonale II),
- Fig. 3: einen Ausschnittbereich im Querschnitt in der Ebene III gemäß Fig. 2,
- Fig. 4: einen weiteren Querschnitt ähnlich Fig. 3 in der Schnittebene IV gemäß Fig. 2,
- Fig. 5: einen Längsschnitt des Elektromotors gemäß Fig. 1 und 2 in einer anderen diametralen Schnittebene entsprechend der in Fig. 1 eingezeichneten Diametrale V,
- Fig. 6: eine perspektivische Explosionsdarstellung des Motors nach Fig. 1 bis 5 (ohne Rotor),
- Fig. 7: eine weitere, bezüglich der Einzelteile noch weiter aufgeteilte Explosionsdarstellung (mit Rotor) und
- Fig. 8: einen Längsschnitt analog zu Fig. 2 in einer Ausführungsvariante (unter anderem mit einem anderen Motorträger) uns
- Fig. 9: eine perspektivische Explosionsdarstellung der Ausführung nach Fig. 8 analog zu Fig. 7.

In den verschiedenen Figuren der Zeichnung sind gleiche Teile stets mit den gleichen Bezugszeichen versehen und brauchen daher in der Regel auch jeweils nur einmal beschrieben zu werden. Daher gilt jede eventuell nur einmal unter Bezugnahme auf eine bestimmte Zeichnungsfigur erscheinende Beschreibung eines Teils analog auch bezüglich der anderen Zeichnungsfiguren, in denen dieses Teil mit dem entsprechenden Bezugszeichen ebenfalls zu erkennen ist.

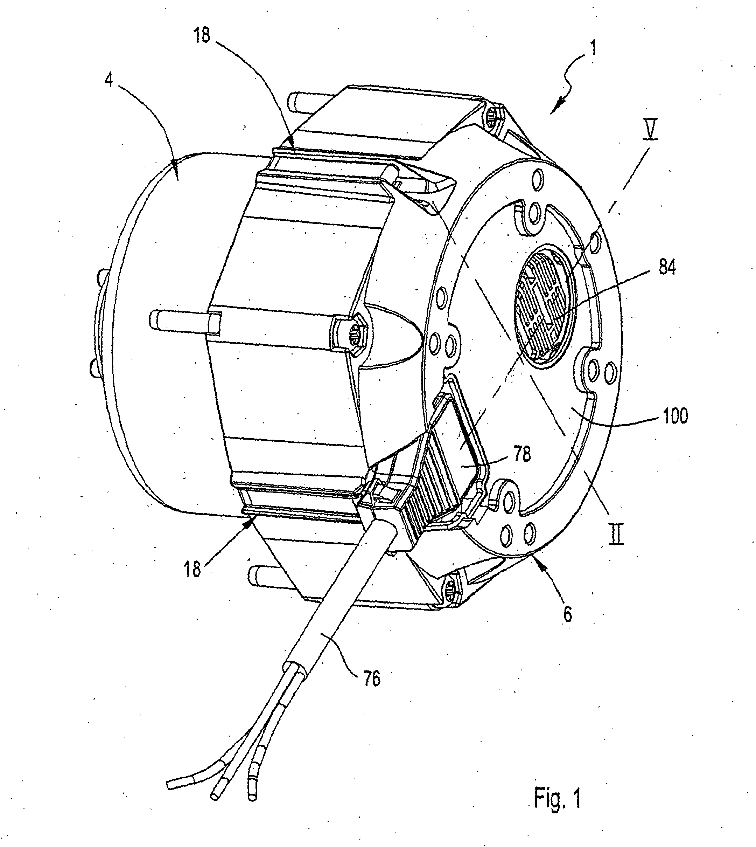

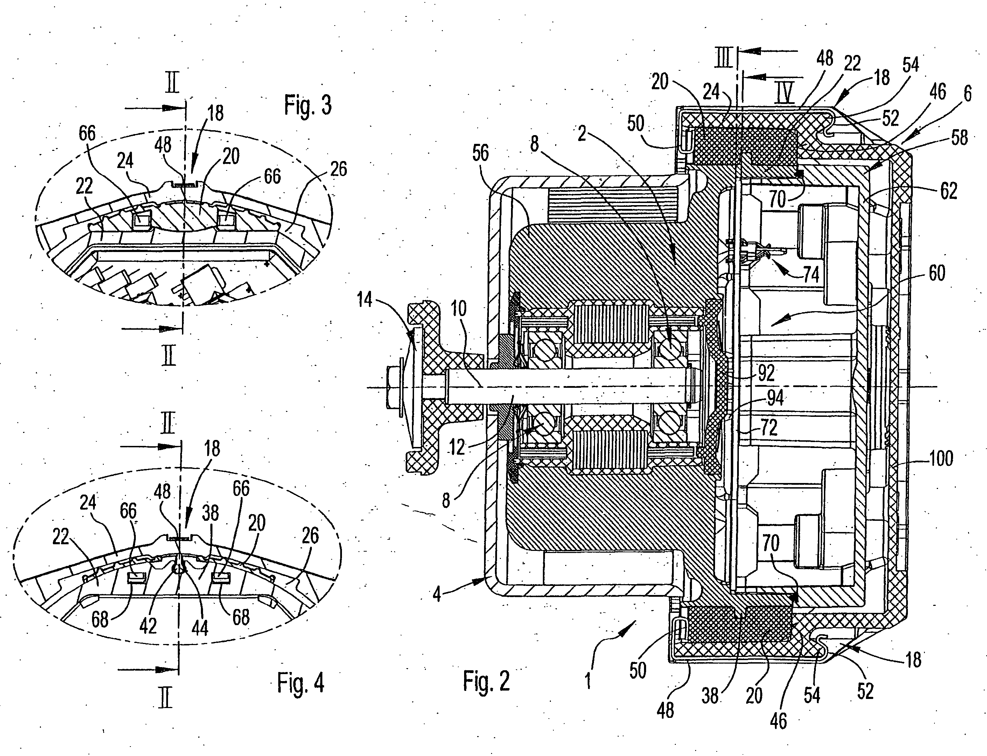

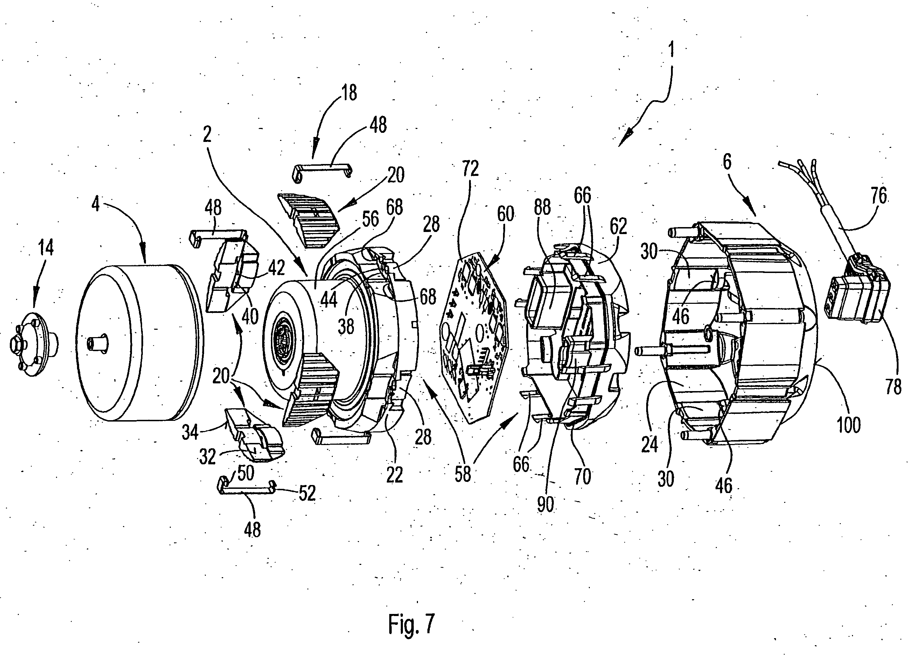

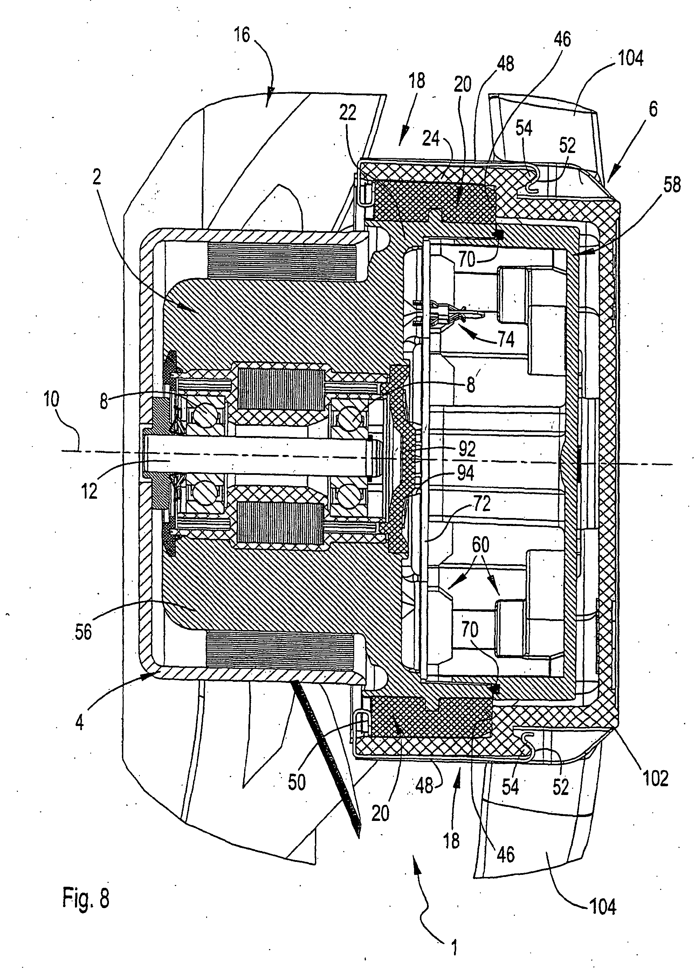

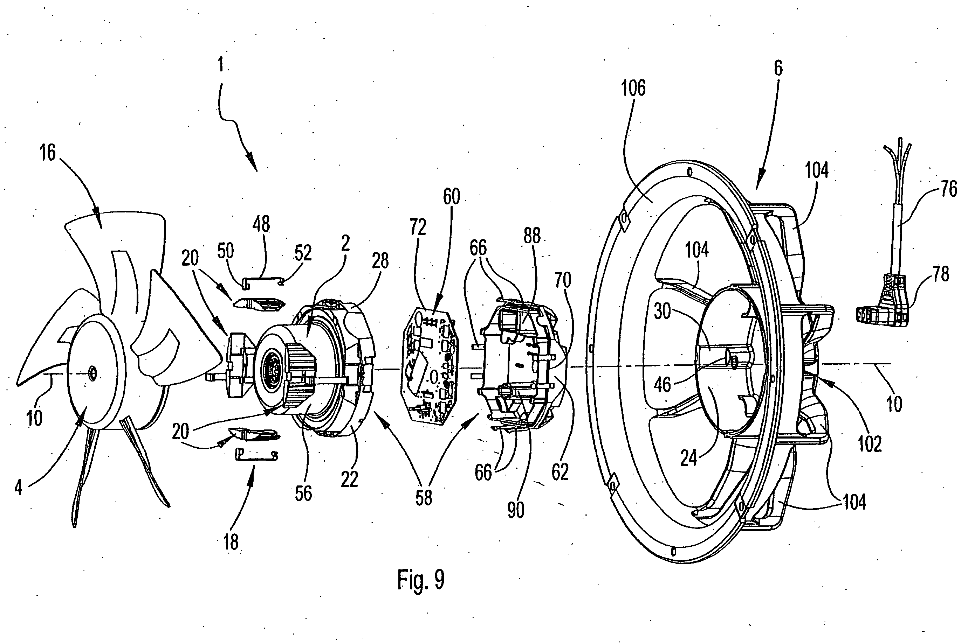

Ein efindungsgemäßer Elektromotor 1 ist in den dargestellten Ausführungen als Außenläufermotor ausgebildet. Dabei besteht der Elektromotor 1 - siehe dazu insbesondere die Explosionsdarstellungen in Fig. 7 und 9 - aus einem Stator 2, einem Rotor (Außenläufer) 4 und einem Motorträger 6. Der Rotor 4 ist innerhalb des Stators 2 über Drehlager 8 um eine Motorachse 10 drehbar gelagert (siehe dazu insbesondere die Längsschnitte in Fig. 2, 5 und 8). Bei der Ausführung nach Fig. 1 bis 7 ist eine Rotorwelle 12 axial nach vorne aus dem Rotor 4 herausgeführt, und an ihrem vorstehenden Ende ist ein beliebiges Befestigungselement 14 zum Anschluß eines anzutreibenden Teils oder Aggregates (nicht dargestellt) angeordnet. Im Falle der alternativen Ausführung gemäß Fig. 8 und 9 endet die Rotorwelle 12 im Bereich einer Stirnwand des' Rotors 4, wobei der Rotor 4 beispielhaft unmittelbar auf seinem Außenumfang ein Lüfterrad 16 trägt.

Der Elektromotor 1 bzw. der den Rotor 4 tragende Stator 2 ist an dem Motorträger 6 über einen axialen Steckfügevorgang schraubenlos mittels Verrastungselementen 18 befestigt. Dabei sind erfindungsgemäß im Verbindungsbereich zwischen dem Stator 2 und dem Motorträger 6 mehrere Elastikelemente 20 zur Schwingungsentkopplung derart integriert angeordnet, dass der Stator 2 unter Beibehaltung der schraubenlosen Steckmontage nur mittelbar über die Elastikelemente 20 mit dem Motorträger 6 in Verbindung steht. In den dargestellten Beispielen sind vier Elastikelemente 20 in radialsymmetrischer Anordnung vorgesehen. Es kann aber auch eine andere Anzahl im Bereich von 3 bis etwa 6 Elastikelementen 20 vorgesehen sein.

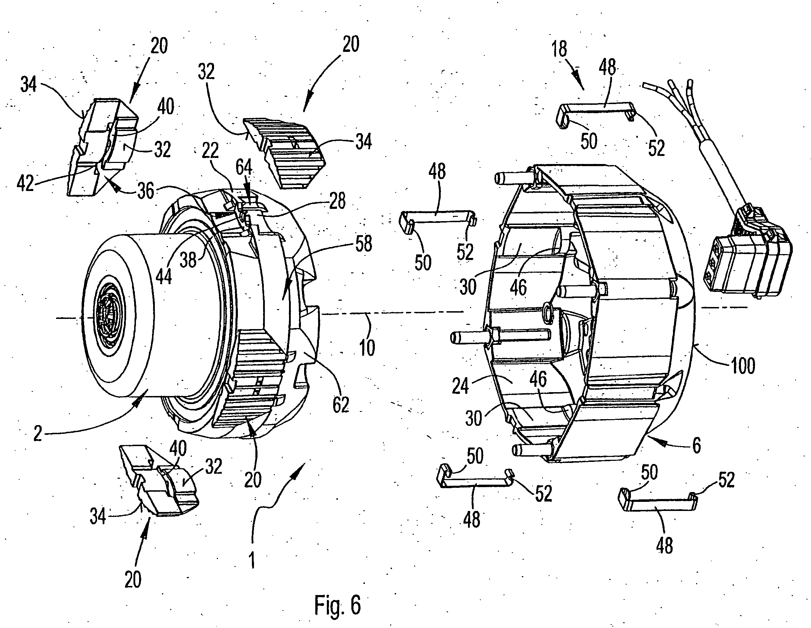

Für diese Verbindung weisen der Stator 2 und der Motorträger 6 jeweils zur Motorachse 10 und auch somit zueinander koaxiale, mit radialem Abstand über - bzw. ineinander gesteckte Verbindungsabschnitte 22 und 24 auf. Die Elastikelemente 20 sitzen jeweils mit radialer und axialer Vorspannung in einem radial zwischen den Verbindungsabschnitten 22, 24 gebildeten Spaltbereich 26; siehe dazu insbesondere die Querschnitte in Fig. 3 und 4. Bevorzugt sind beide Verbindungsabschnitte 22, 24 als im Wesentlichen ringförmige, sich axial erstreckende Stegabschnitte ausgebildet, wobei vorzugsweise der Verbindungsabschnitt 24 des Motorträgers 6 den Verbindungsabschnitt 22 des Stators 2 außen übergreift. Dabei sind die Elastikelemente 20 - siehe insbesondere Fig. 6 - als einzelne, im Wesentlichen flächige Formkörper jeweils mit in Anpassung an korrespondierende Anlagebereiche 28 bzw. 30 der Verbindungsabschnitte 22, 24 geformten und leicht gekrümmten Innen-und Außenflächen 32, 34 derart ausgebildet, dass zwischen den nur über die Elastikelemente 20 in Verbindung stehenden Verbindungsabschnitten 22, 24 in Axialrichtung, in Umfangsrichtung sowie auch in Radialrichtung nur geringfügige elastische Relativbewegungen zur Schwingungsentkopplung möglich sind.

Jedes Elastikelement 20 ist auf dem Außenumfang des Stator-Verbindungsabschnittes 22 über Fixiermittel 36 derart gehalten, dass in Axialrichtung eine Formschlußverbindung und in Radial- und Umfangsrichtung zumindest eine Kraftformschlußverbindung gegeben sind. Wie am Besten in Fig. 6 zu erkennen ist, sind die Fixiermittel 36 als eine sich etwa in Umfangsrichtung erstreckende Nut-/Federverbindung mit zusätzlicher schnappbarer Kraftformschlußverbindung (Rastverbindung) ausgebildet. Dazu weist jeder Anlagebereich 28 des statorseitigen Verbindungsabschnittes 22 einen in Umfangsrichtung verlaufenden Steg 38 auf (siehe dazu auch Fig. 2 und 4), und jedes Elastikelement 20 weist eine entsprechende Aufnahmenut 40 zum Aufsetzen auf den Steg 38 auf. Innerhalb der Aufnahmenut 40 ist ein knopfartiger Ansatz 42 angeordnet, der in eine korrespondierende Rastausnehmung 44 des Steges 38 rastend eingreift. Dies ist insbesondere in Fig. 4 gut zu erkennen. Durch die beschriebene Ausgestaltung läßt sich jedes Elastikelement 20 auf einfache Weise radial auf den Anlagebereich 28 des Verbindungsabschnittes 22 aufsetzen und so fixieren. Der Motorträger 6 kann dann mit seinem Verbindungsabschnitt 24 axial kraftschlüssig über die Elastikelemente 20 aufgeschoben werden. Im aufgeschobenen Zustand wird dann jedes Elastikelement 20 in axialer Richtung formschlüssig zwischen einer Anlagestufe 46 innerhalb des Motorträger-Verbindungsabschnittes 24 (siehe Fig. 2, 5 und 8 sowie auch Fig. 6) und einer als Verrastungselement 18 aufgesetzten Federklammer 48 gehalten. Dadurch wird allein über die Elastikelemente 20 der ganze Motor über den Stator 2 schwingungsentkoppelt gehalten. Dies bedeutet, dass der Elektromotor 1 über die Elastikelemente 20 in dem Motorträger 6 schwingungsentkoppelt aufgehängt ist. Wie sich insbesondere aus den Längsschnittdarstellungen in Fig. 2, 5 und 8 ergibt, übergreift jede von außen aufgesetzte Federklammer 48 den Motorträger-Verbindungsabschnitt 24 außen in axialer Richtung und greift mit einem einendigen Stützabschnitt 50 radial und axial in den Motorträger-Verbindungsabschnitt 24 zur Anlage an dem zugehörigen Elastikelement 20 ein. Hierbei ist jede Federklammer 48 mit einem anderendigen Rastabschnitt 52 mit dem Verbindungsabschnitt 24 verrastet. Wie dargestellt ist jeder Rastabschnitt 52 bogenförmig gekrümmt und umgreift eine im Querschnitt etwa nasenartige Rastkante 54 des Motorträgers 6.

In den dargestellten, bevorzugten Ausführungen ist der Stator-Verbindungsabschnitt 22 einstückig angeformter Bestandteil einer statorisolierung 56, die insbesondere aus einem Duroplast besteht. Dabei werden Statorblechpäket und Stätorwicklüngen (nicht dargestellt) vorzugsweise unter gleichzeitiger Formung des Verbindungsabschnittes 22 umpresst.

Gemäß einer bevorzugten Ausgestaltung der Erfindung bildet der Stator-verbindungsabschnitt 22 zusätzlich einen Teil eines inneren Elektronikgehäuses 58 zur Aufnahme einer Motor-Steuerelektronik 60. Dies bedeutet, dass der Verbindungsabschnitt 22 eine Wandung des Elektronikgenäuses 58 bildet, wobei zusätzlich eine innere Gehäusekappe 62 vorteilhafterweise über axial fügbare Rastelemente 64 mit dem Verbindungsabschnitt 22 verbunden ist. Dazu weist die Gehäusekappe 62 axial vorstehende Rastarme 66 auf, die mit Rastansätzen in korrespondierende Rastöffnungen 68 insbesondere im Bereich der Stege 38 des Verbindungsabschnittes 22 eingreifen. Dazu wird vor allem auf Fig. 6 und 7 hingewiesen. Im Bereich jedes Steges 38 sind zwei Rastarme 66 bzw. Rastöffnungen 68 vorgesehen. Dabei weist jedes Elastikelement 20 innenseitig entsprechende korrespondierende Freisparungen für die Rastarme 66 auf, siehe insbesondere Fig. 3. Weiterhin ist vorzugsweise zwischen der Gehäusekappe und dem Verbindungsabschnitt 22 eine Umfangsdichtung 70 angeordnet, die insbesondere einstückig aus einem weichen elastischen Kunststoff an die Gehäusekappe 62 angeformt ist. Dabei kann die Gehäusekappe 62 wirtschaftlich in einem Zweikomponenten-Spritzverfahren hergestellt werden.

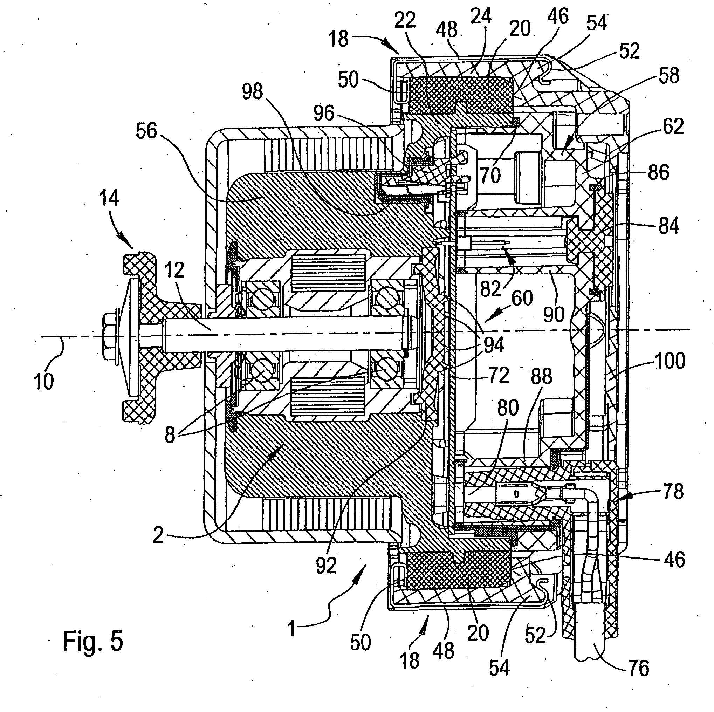

Die Steuerelektronik 60 ist zumindest teilweise auf einer Leiterplatte 72 angeordnet, die ihrerseits insbesondere senkrecht zur Motorachse 10 liegend innerhalb des Elektronikgehäuses 58 auf der dem Stator 2 zugekehrten Seite angeordnet ist. Vorteilhafterweise sind alle notwendigen internen elektrischen Verbindungen, insbesondere zwischen nicht dargestellten Statorwicklungen und der Steuerelektronik 60, über axial fügbare Steckverbindungen 74 ausgeführt, wie beispielsweise in Fig. 2 und 8 dargestellt ist. Weiterhin ist gemäß Fig. 1 und 5, vergleiche auch Fig. 7 und 9, ein extemes Anschlußkabel 76 über einen vorzugsweise axial steckbaren Anschlußstecker 78 angeschlossen bzw. anschließbar. Gemäß Fig. 5 trägt dazu die Leiterplatte 72 einen korrespondierenden Gegenverbinder 80, wobei der Anschlußstecker 78 abgedichtet durch eine Öffnung im jeweiligen Motorträger 6 geführt ist. Zur Abdichtung sind bevorzugt geeignete Weichdichtungen vorgesehen.

Wie weiterhin in Fig. 5 erkennbar ist, weist die Steuerelektronik 60 vorzugsweise eine Schnittstelle 82 zum Anschluß einer externen Steuerleitung auf. Diese Schnittstelle 82 dient insbesondere zum Programmieren der Steuerelektronik 60. Die Schnittstelle 82 ist als axial fügbare Steckverbindung ausgebildet und durch Öffnungen des Elektronikgehäuses 58 bzw. der Gehäusekappe 62 und des jeweiligen Motorträgers 6 zugänglich. Diese Öffnungen, insbesondere die Öffnung der Gehäusekappe 62, ist durch ein lösbares Verschlußelement 84 verschlossen. Dabei kann es sich mit Vorteil um einen sogenannten Knebel- oder Bajonettverschluß handeln, der über eine Dichtung 86 abgedichtet ist.

Hierbei weist die Gehäusekappe 62 integrierte, d. h. einstückig angeformte Steckergehäuse (Steckschächte) 88, 90 zur führenden Aufnahme des Anschlußsteckers 78 bzw. eines nicht dargestellten Steckers für die Schnittstelle 82 auf (Fig. 5).

Wie sich weiterhin insbesondere aus den Längsschnitten in Fig. 2, 5 und 8 ergibt, weist der Stator 2 zur Montage eines der Rotor-Drehlager 8 auf der der Leiterplatte 72 zugekehrten Seite eine Montageöffnung auf, die mit einem Verschlußteil 92 verschlossen ist, um den Lagerbereich von dem Elektronikgehäuse 58 zu trennen. Dieses Verschlußteil 92 besteht aus einem elastischen Material (Dichtungsmaterial) und weist vorzugsweise angeformte Ansätze 94 zur abstützenden und schwingungsvermeidenden Anlage an der Leiterplatte 72 auf.

In Fig. 5 ist ferner ein Sensor 96, insbesondere Rotorstellungssensor, der Steuerelektronik 60 veranschaulicht, der von der Leiterplatte 72 axial in eine Ausnehmung des Stators 2 ragt und von einer elektrisch isolierenden, becherartigen Isolierung 98 umgeben ist. Bei dieser Isolierung 98 kann es sich um mindestens einen sogenannten Folienbecher, gegebenenfalls auch mehrere, beispielsweise zwei ineinandergesetzte Folienbecher handeln.

Bei der Ausführungsform gemäß Fig. 1 bis 7 ist der Motorträger 6 als topfartiger Halteflansch mit einer Bodenwandung 100 und dem damit insbesondere einstückig verbundenen Verbindungsabschnitt 22 ausgebildet. Bei dieser Ausführung besteht der Motorträger 6 insbesondere aus Metall, beispielsweise Aluminium.

Im Unterschied dazu ist im Falle der Ausführung der Fig. 8 und 9 der Motorträger 6 als sogenannter Wandring mit einem den Verbindungsabschnitt 24 aufweisenden, insbesondere topfartigen Innenteil 102 und einem damit über etwa radiale Speichenelemente 104 verbundenen Außenring 106 ausgebildet. Dieser Wandring ist insbesondere aus Kunststoff als einstückiges Formteil ausgebildet.

Durch die beschriebene erfindungsgemäße bzw. bevorzugte Ausgestaltung des Elektromotors 1 wird praktisch ein modularer und dadurch fertigungsoptimierter Aufbau erreicht. Die Bestandteile des Motors 1 sind schraubenlos allein durch axiale Fügevorgänge leicht und schnell montierbar. Es wird auch ein hoher IP-Schutz erreicht. Der Anschlußstecker 78 ermöglicht einen nachträglichen Anschluß der Anschlußleitungen 76 erst nach vollständiger Montage des Motors. Der Motor arbeitet sehr geräuscharm. Durch den modularen Aufbau lassen sich auf einfache Weise unterschiedliche Gehäusegeometrien verwirklichen. Durch das Elektronikgehäuse 58 erübrigt sich ein aufwändiger Elektronikverguß. Weiterhin wird auf einfache Weise eine Programmiermöglichkeit geschaffen.

Die Erfindung ist nicht auf die dargestellten und beschrieben Ausführungsbeispiele beschränkt, sondem umfaßt auch alle im Sinne der Erfindung gleichwirkenden Ausführungen. So ist insbesondere auch ein "umgekehrtes" Eingreifen der Verbindungsabschnitte 22, 24 des Stators 2 und des Motorträgers 6 möglich, d. h. der Stator könnte mit seinem Verbindungsabschnitt auch den Verbindungsabschnitt des Motorträgers übergreifen. Weiterhin kann grundsätzlich auch ein Verguß der Motorelektronik vorgesehen sein (anstatt des angeklipsten Gehäuses).

## Patentansprüche

1. Elektromotor (1), insbesondere Außenläufermotor, mit einem Stator (2), der an einem Motorträger (6) über einen Steckfügevorgang schraubenlos mittels Verrastungselementen (18) befestigt ist, wobei im Verbindungsbereich zwischen dem Stator (2) und dem Motorträger (6) Elastikelemente (20) zur Schwingungsentkopplung derart integriert angeordnet sind, dass der Stator (2) nur mittelbar über die Elastikelemente (20) mit dem Motorträger (6) in Verbindung steht, und wobei der Stator (2) und der Motorträger (6) mit radialem Abstand über- bzw. ineinander gesteckte Verbindungsabschnitte (22, 24) aufweisen und die Elastikelemente (20) jeweils mit radialer und axialer Vorspannung in einem radial zwischen den Verbindungsabschnitten (22, 24) gebildeten Spaltbereich (26) sitzen,
wobei die Verbindungsabschnitte (22, 24) als im Wesentlichen ringförmige, zur Motorachse (10) koaxiale, sich axial erstreckende Stegabschnitte ausgebildet sind, wobei der Motorträger (6) mit seinem Verbindungsabschnitt (24) kraftschlüssig über die Elastikelemente (20) aufgeschoben ist, wobei im aufgeschobenen Zustand jedes Elastikelement (20) in axialer Richtung formschlüssig zwischen einer Anlagestufe (46) innerhalb des Motor-Verbindungsabschnittes (24) und einer als Verrastungselement (18) aufgesetzten Federklammer (48) gehalten ist, **dadurch gekennzeichnet, dass** jede Federklammer (48) den Motorträger-Verbindungsabschnitt (24) außen in axialer Richtung übergreift und mit einem einendigen Stützabschnitt (50) radial und axial in den Motorträger-Verbindungsabschnitt (24) zur Anlage an dem zugehörigen Elastikelement (20) eingreift sowie mit einem anderendigen Rastabschnitt (52) mit dem Verbindungsabschnitt (24) verrastet ist.

2. Elektromotor nach Anspruch 1,
**dadurch gekennzeichnet, dass** die Elastikelemente (20) radialsymmetrisch verteilt angeordnet sind.

3. Elektromotor nach Anspruch 1 oder 2,
**dadurch gekennzeichnet, dass** der Verbindungsabschnitt (24) des Motorgehäuses (6) den Verbindungsabschnitt (22) des Stators (2) außen übergreift.

4. Elektromotor nach einem der Ansprüche 1 bis 3,
**dadurch gekennzeichnet, dass** die Elastikelemente (20) als einzelne, im Wesentlichen flächige Formkörper jeweils mit in Anpassung an korrespondierende Anlagebereiche (28, 30) der Verbindungsabschnitte (22,24) geformten Innen- und Außenflächen (32, 34) ausgebildet sind.

5. Elektromotor nach einem der Ansprüche 1 bis 4,
**dadurch gekennzeichnet, dass** jedesElastikelement(20)auf dem Außenumfang des Stator-Verbindungsabschnittes (22) über Fixiermittel (36) derart gehalten ist, dass in Axialrichtung eine Formschlußverbindung und in Radial- und Umfangsrichtung zumindest eine Kraftformschlußverbindung gegeben sind.

6. Elektromotor nach Anspruch 5,
**dadurch gekennzeichnet, dass** die Fixiermittel (36) als eine sich etwa in Umfangsrichtung erstreckende Nut-/Federverbindung mit schnappbarer Kraftformschlußverbindung ausgebildet sind.

7. Elektromotor nach einem der Ansprüche 1 bis 6,
**dadurch gekennzeichnet, dass** der Stator-Verbindungsabschnitt (22) einstückig angeformter Bestandteil einer Statorisolierung (56) ist.

8. Elektromotor nach einem der Ansprüche 1 bis 7,
**dadurch gekennzeichnet, dass** der Stator-Verbindungsabschnitt (22) zusätzlich einen Teil eines inneren Elektronikgehäuses (58) zur Aufnahme einer Motor-Steuerelektronik (60) bildet, wobei eine innere Gehäusekappe (62) über axial fügbare Rastelemente (64) mit dem Verbindungsabschnitt (22) verbunden ist.

9. Elektromotor nach Anspruch 8,
**dadurch gekennzeichnet, dass** zwischen der Gehäusekappe (62) und dem Verbindungsabschnitt (22) eine Umfangsdichtung (70) angeordnet ist, die vorzugsweise einstückig aus einem weichen elastischen Kunststoff insbesondere an die Gehäusekappe (62) angeformt ist.

10. Elektromotor nach Anspruch 8 oder 9,
**dadurch gekennzeichnet, dass** innerhalb des Elektronikgehäuses (58) eine Leiterplatte (72) insbesondere senkrecht zur Motorachse (10) liegend angeordnet ist.

11. Elektromotor nach einem der Ansprüche 8 bis 10,
**dadurch gekennzeichnet, dass** allenotwendigenintemen elektrischen Verbindungen, insbesondere zwischen Statorwicklungen und der Steuerelektronik (60), über axial fügbare Steckverbindungen (74) erfolgen.

12. Elektromotor nach einem der Ansprüche 1 bis 11,
**dadurch gekennzeichnet, dass** ein externes Anschußkabel (76) über einen insbesondere axial steckbaren Anschlußstecker (78) angeschlossen bzw. anschließbar ist.

13. Elektromotor nach einem der Ansprüche 8 bis 12,
**dadurch gekennzeichnet, dass** dieSteuerelektronik(60)eine Schnittstelle (82) zum Anschluß einer externen Steuerleitung aufweist, wobei die Schnittstelle (82), als axial fügbare Steckverbindung ausgebildet und durch eine Öffnung des Elektronikgehäuses (58) zugänglich ist, und wobei die Öffnung durch ein lösbares Verschlußelement (84) verschlossen ist.

14. Elektromotor nach einem der Ansprüche 8 bis 13,
**dadurch gekennzeichnet, dass** innerhalb des Stators (2) zwischen dem Bereich des Elektronikgehäuses (58) und einem Rotorlager (8) eine Montageöffnung gebildet ist, die mit einem Verschlußteil (92) verschlossen ist.

15. Elektromotor nach Anspruch 14,
**dadurch gekennzeichnet, dass** dasVerschlußteil(92)aus einem elastischen Material besteht und vorzugsweise über angeformte Ansätze (94) zur Abstützung gegen Schwingungen der Leiterplatte (72) an dieser anliegt.

16. Elektromotor nach einem der Ansprüche 8 bis 15,
**dadurch gekennzeichnet, dass** die Steuerelektronik (60) einen in den Stator (2) ragenden Sensor (96), insbesondere Rotorstellungssensor, aufweist, der von einer elektrisch isolierenden, becherartigen Isolierung (98) umgeben ist.

17. Elektromotor nach einem der Ansprüche 1 bis 16,
**dadurch gekennzeichnet, dass** der Motorträger (6) als Halteflansch mit einer Bodenwandung (100) und dem damit verbundenen Verbindungsabschnitt (22) ausgebildet ist.

18. Elektromotor nach einem der Ansprüche 1 bis 16,
**dadurch gekennzeichnet, dass** der Motorträger (6) als Wandring mit einem den Verbindungsabschnitt (24) aufweisenden Innenteil (102) und einem damit über Speichenelemente (104) verbundenen Außenring (106) ausgebildet ist.

## Claims

1. An electric motor (1), in particular an external-rotor motor, with a stator (2) which is fastened to a motor carrier (6) by means of catch elements (18) by a plug-in join procedure without bolts, resilient elements (20) to de-couple vibrations being arranged in an integrated manner in the connexion region between the stator (2) and the motor carrier (6) in such a way that the stator (2) is connected to the motor carrier (6) only indirectly by way of the resilient elements (20), and the stator (2) and the motor carrier (6) comprising connexion portions (22, 24) attached one above the other at a radial distance or one in the other, and the resilient elements (20) being arranged with radial and axial pre-stressing in each case in a gap region (26) formed radially between the connexion portions (22, 24), the connexion portions (22, 24) being constructed in the form of substantially annular web portions which are coaxial with the motor axis (10) and which extend axially, the motor carrier (6) being pressed with its connexion portion (24) over the resilient elements (20) in a frictionally locking manner, each resilient element (20) in the pressed-on state being held in the axial direction in a positively locking manner between an abutment step (46) inside the motor connexion portion (24) and a spring clip (48) attached as a catch element (18), **characterized in that** each spring clip (48) engages over the motor-carrier connexion portion (24) in the axial direction on the outside and, with a support portion (50) at one end, engages radially and axially in the motor-carrier connexion portion (24) in order to abut against the associated resilient element (20) and, with a catch portion (52) at the other end, catches with the connexion portion (24).

2. An electric motor according to Claim 1, **characterized in that** the resilient elements (20) are arranged distributed in a radially symmetrical manner.

3. An electric motor according to Claim 1 or 2, **characterized in that** the connexion portion (24) of the motor housing (6) engages over the connexion portion (22) of the stator (2) on the outside.

4. An electric motor according to one of Claims 1 to 3, **characterized in that** the resilient elements (20) are designed in the form of individual, substantially flat moulded bodies having in each case inner and outer faces (32, 34) which are shaped in a manner adapted to corresponding abutment regions (28, 30) of the connexion portions (22,24).

5. An electric motor according to one of Claims 1 to 4, **characterized in that** each resilient element (20) is held on the external periphery of the stator connexion portion (22) by way of fixing means (36) in such a way that a positively locking connexion is provided in the axial direction and at least a frictionally / positively locking connexion is provided in the radial and peripheral directions.

6. An electric motor according to Claim 5, **characterized in that** the fixing means (36) are designed in the form of a tongue-and-groove connexion extending substantially in the peripheral direction and having a snap-on frictionally / positively locking connexion.

7. An electric motor according to one of Claims 1 to 6, **characterized in that** the stator connexion portion (22) is an integrally formed component part of a stator insulation (56).

8. An electric motor according to one of Claims 1 to 7, **characterized in that** the stator connexion portion (22) additionally forms part of an inner housing (58) for receiving an electronic control device (60) for the motor, an inner housing cap (62) being connected to the connexion portion (22) by way of catch elements (64) capable of being joined axially.

9. An electric motor according to Claim 8, **characterized in that** a peripheral seal (70), which is formed, preferably in one piece, from a yielding, resilient plastics material, in particular in an integral manner on the housing cap (62), is arranged between the housing cap (62) and the connexion portion (22).

10. An electric motor according to Claim 8 or 9, **characterized in that** a printed-circuit board (72) is arranged horizontally inside the housing (58) for the electronic device, in particular at a right angle to the motor axis (10).

11. An electric motor according to one of Claims 8 to 10, **characterized in that** all the necessary internal electrical connexions, in particular between the stator windings and the electronic control device (60), are made by way of plug-in connexions (74) capable of being joined axially.

12. An electric motor according to one of Claims 1 to 11, **characterized in that** an external attachment cable (76) is attached or capable of being attached by way of an attachment plug (78), in particular capable of being plugged in axially.

13. An electric motor according to one of Claims 8 to 12, **characterized in that** the electronic control device (60) has an interface (82) for attaching an external control line, the interface (82) being constructed in the form of a plug-in connexion capable of being joined axially and being accessible through an opening in the housing (58) for the electronic device, and the opening being closed by a releasable closure element (84).

14. An electric motor according to one of Claims 8 to 13, **characterized in that** an assembly opening, which is closed by a closure part (92), is formed inside the stator (2) between the region of the housing (58) for the electronic device and a rotor bearing (8).

15. An electric motor according to Claim 14, **characterized in that** the closure part (92) consists of a resilient material and rests against the printed-circuit board (72), preferably by way of integrally formed attachments (94), for protection against vibrations of the said printed-circuit board (72).

16. An electric motor according to one of Claims 8 to 15, **characterized in that** the electronic control device (60) has a sensor (96), in particular a rotor-setting sensor, which projects into the stator (2) and which is surrounded by an electrically insulating, cup-like insulation (98).

17. An electric motor according to one of Claims 1 to 16, **characterized in that** the motor carrier (6) is designed in the form of a holding flange with a bottom wall (100) and the connexion portion (22) which is connected to it.

18. An electric motor according to one of Claims 1 to 16, **characterized in that** the motor carrier (6) is designed in the form of a wall ring with an inner part (102), which comprises the connexion portion (24), and an outer ring (106), which is connected to the said inner part (102) by way of spoke elements (104).

## Revendications

1. Moteur électrique (1), en particulier moteur à induit extérieur avec un stator (2), qui est fixé à un support de moteur (6) par un procédé d'insertion par enfichage sans vis au moyen d'éléments d'accrochage (18), sachant que dans la zone de liaison entre le stator (2) et le support de moteur (6), sont intégrés des éléments élastiques (20) destinés à amortir les oscillations et agencés de telle sorte que le stator (2) est relié au support de moteur (6) uniquement par l'intermédiaire des éléments élastiques (20), et sachant que le stator (2) et le support de moteur (6) comportent des parties de liaison (22, 24) enfichées l'une sur l'autre ou l'une à l'intérieur de l'autre avec un écart radial et que les éléments élastiques (20) sont logés, avec une précontrainte, respectivement radiale et axiale, dans une zone d'entrefer radiale (26) formée entre les parties de liaison (22,24),sachant que les parties de liaisons (22, 24) sont réalisées sous forme de parties de traverses disposées axialement, sensiblement annulaires, coaxiales par rapport à l'axe du moteur (10), et que le support de moteur (6) avec sa partie de liaison (24) est positionné sur les éléments élastiques (20) en force, sachant qu'à l'état positionné, chaque élément élastique (20) est maintenu mécaniquement en direction axiale, entre un étage de contact (46) à l'intérieur de la partie de liaison du moteur (24) et une bride à ressort (48) montée comme élément d'accrochage (18), **caractérisé en ce que** chaque bride à ressort (48) recouvre la partie de liaison du support de moteur (24) à l'extérieur, en direction axiale et que ladite bride à ressort s'engage avec une partie d'appui à une extrémité (50), de manière radiale et axiale dans la partie de liaison du support de moteur (24) pour un contact avec l'élément élastique correspondant (20) et qu'elle est accrochée à la partie de liaison (24) par une partie d'accrochage (52) comportant une extrémité différente.

2. Moteur électrique selon la revendication 1,
**caractérisé en ce que** les éléments élastiques (20) sont agencés par répartition symétrique radiale.

3. Moteur électrique selon la revendication 1 ou 2,
**caractérisé en ce que** la partie de liaison (24) de la carcasse du moteur (6) recouvre extérieurement la partie de liaison (22) du stator (2).

4. Moteur électrique selon l'une quelconque des revendications 1 à 3,
**caractérisé en ce que** les éléments élastiques (20) sont réalisés sous forme de corps individuels, formés, sensiblement en nappe, chacun étant doté de surfaces internes et externes formées (32, 34) en vue de s'adapter aux plages de contact correspondantes (28, 30) des parties de liaison (22,24).

5. Moteur électrique selon l'une quelconque des revendications 1 à 4,
**caractérisé en ce que** chaque élément élastique (20) est maintenu sur la circonférence externe de la partie de liaison du stator (22) à l'aide d'un moyen de fixation (36) de manière à former une liaison mécanique en direction axiale, et au moins une liaison mécanique en force en directions radiale et circonférentielle.

6. Moteur électrique selon la revendication 5,
**caractérisé en ce que** les moyens de fixation (36) sont réalisés sous forme d'un assemblage à rainure/languette dirigé à peu près vers la circonférence, avec une liaison mécanique en force encliquetable.

7. Moteur électrique selon l'une quelconque des revendications 1 à 6,
**caractérisé en ce que** la partie de liaison du stator (22) est un élément constitutif, formé d'un seul tenant, d'une isolation du stator (56).

8. Moteur électrique selon l'une quelconque des revendications 1 à 7,
**caractérisé en ce que** la partie de liaison du stator (22) forme par ailleurs, une partie d'un boîtier électronique intérieur (58) destiné à recevoir l'électronique de commande du moteur (60), sachant qu'un couvercle de boîtier intérieur (62) est relié, via les éléments d'accrochage (64) insérables axialement, à la partie de liaison (22).

9. Moteur électrique selon la revendication 8,
**caractérisé en ce que** entre le couvercle de boîtier (62) et la partie de liaison (22), est agencé un joint annulaire (70), formé de préférence d'un seul tenant, en matière élastique souple, en particulier sur le couvercle du boîtier (62).

10. Moteur électrique selon la revendication 8 ou 9,
**caractérisé en ce que** à l'intérieur du boîtier électronique (58) est agencée une carte de circuit imprimé (72), en particulier montée verticalement par rapport à l'axe du moteur (10).

11. Moteur électrique selon l'une quelconque des revendications 8 à 10,
**caractérisé en ce que** toute les liaisons électriques internes nécessaires, en particulier entre les enroulements du stator et l'électronique de commande (60), sont établies via des liaisons enfichables, insérables axialement (74).

12. Moteur électrique selon l'une quelconque des revendications 1 à 11,
**caractérisé en ce que** un câble de raccordement externe (76) est raccordé ou raccordable, via un connecteur enfichable (78), en particulier insérable axialement.

13. Moteur électrique selon l'une quelconque des revendications 8 à 12,
**caractérisé en ce que** l'électronique de commande (60) comporte une interface (82) pour le raccordement d'un câble de commande externe, sachant que l'interface (82) est réalisée sous forme de liaison enfichable, insérable axialement et qu'est accessible au travers d'une ouverture du boîtier électronique (58), et sachant que l'ouverture est obturée par un élément d'obturation amovible (84).

14. Moteur électrique selon l'une quelconque des revendications 8 à 13,
**caractérisé en ce que** à l'intérieur du stator (2), entre la zone du boîtier électronique (58) et un palier de rotor (8), est réalisée une ouverture de montage, obturée par une pièce d'obturation (92).

15. Moteur électrique selon la revendication 14,
**caractérisé en ce que** la pièce d'obturation (92) est constituée d'un matériau élastique et s'appuie de préférence par l'intermédiaire d'épaulements formés (94), sur la carte de circuit imprimé (72), en vue d'éviter les oscillations de celle-ci.

16. Moteur électrique selon l'une quelconque des revendication 8 à 15,
**caractérisé en ce que** l'électronique de commande (60) comporte un capteur (96) en saillie dans le stator (2), en particulier un capteur de position du rotor qui est entouré d'une isolation, assurant une isolation électrique comme un boîtier (98).

17. Moteur électrique selon l'une quelconque des revendications 1 à 16,
**caractérisé en ce que** le support de moteur (6) est réalisé en tant que flasque de maintien avec une paroi de fond (100) et la partie de liaison (22) reliée à celui-ci.

18. Moteur électrique selon l'une quelconque des revendication 1 à 16,
**caractérisé en ce que** le support du moteur (6) est réalisé en tant que paroi annulaire avec une partie interne (102) comportant la partie de liaison (24) et un anneau externe (106) relié à la paroi annulaire, au moyen d'éléments à croisillons (104).
